**Europäisches Patentamt**

**European Patent Office**

**Office européen des brevets**

(11) Publication number: **0 241 631 B1**

# EUROPEAN PATENT SPECIFICATION

(45) Date of publication of patent specification :
**02.01.91 Bulletin 91/01**

(51) Int. Cl.⁵ : **B65H 29/04, B65G 17/06**

(21) Application number: **86850339.2**

(22) Date of filing : **08.10.86**

(54) Interconnecting members forming a conveyor chain.

(30) Priority : **20.02.86 US 831186**

(43) Date of publication of application :
**21.10.87 Bulletin 87/43**

(45) Publication of the grant of the patent :
**02.01.91 Bulletin 91/01**

(84) Designated Contracting States :
**AT BE CH DE FR GB IT LI LU NL SE**

(56) References cited :
**CH-A- 644 816**
**FR-A- 2 252 268**
**GB-A- 2 119 763**

(73) Proprietor : **WAMAC AB**
**P.O. Box 189**
**S-575 00 Eksjö (SE)**

(72) Inventor : **Houseman, Dan**
**19 Chartres**
**Lake Saint Louis Mo 63367 (US)**

(74) Representative : **Barnieske, Hans Wolfgang**
**c/o H.W. Barnieske Patentbyrä AB P.O. Box 25**
**Turingegatan 26**
**S-151 21 Södertälje 1 (SE)**

EP 0 241 631 B1

Jouve, 18, rue Saint-Denis, 75001 PARIS

## Description

The present invention relates to interconnecting members for a gripper conveyor system, according to the preamble of claim 1. Interconnecting members of this kind are known from FR-A-2 252 268.

Gripper systems are typically utilized by newspaper publishers for conveying a signature stream from one location to another. Such systems comprise a conveyor which carries grippers for the newspapers or other signatures. The conveyor comprises a chain of interconnecting members, and this chain is guided in a guide track. At least some of the interconnecting members or chain links carry grippers for gripping and releasing the newspapers.

GBA-2 119 763 reveals a signature handling system of the mentioned general type.

The chain links shown in FR-A-2 252 268 are interconnected by a transfer linking pin, the ends of which are supported by two fork fingers on one link and extending through an opening in an adjacent chain link. Said pin opening is arranged in a ball, Which is rotatably enclosed in a socket, which has openings for said pin. In this arrangement, the pin is free to swivel in mutually perpendicular directions, and in turn this means that the guide track for the chain can be curved in mutually perpendicular directions.

The ball- and socket-arrangement of the previously known chain link comprises a plurality of socket parts which have to be separately made and assembled pairwise around a ball, Whereafter the ball-socket assembly then must be mounted in a corresponding bore in the link body.

The object of the invention is to provide interconnecting links which are of the type shown in FR-A-2 252 268 but which have a simplified structure related to the ball and -socket arrangement.

The subjet-matter of the invention is defined by the features of claim 1.

Thus broadly the invention can be said to reside in the fact that a metallic ball bearing is molded in place in a body of plastics material, the body having basicaly the structure shown in FR-A-2 252 268.

Preferably the ball shaped bearing is made of steel

After molding of the link with molded-in metallic bearing ball the ball is pivotable in the cavity after overcoming slight initial rest friction.

An embodiment of the invention will now be described in connection to the appended drawings in which

Figure 1 shows a plan view of several links of a signature conveyor assembly conveyor chain embodying the principles of the present invention,

Figures 2a and 2b respectively show top and side elevational views of one of the links shown in Figure 1,

Figures 2c and 2d show side elevational and bottom plan views respectively of the link in Figures 2a and 2b with the roller removed, and

Figures 2e, 2f show sectional views of a conveyor link looking in the direction of arrows A-A;

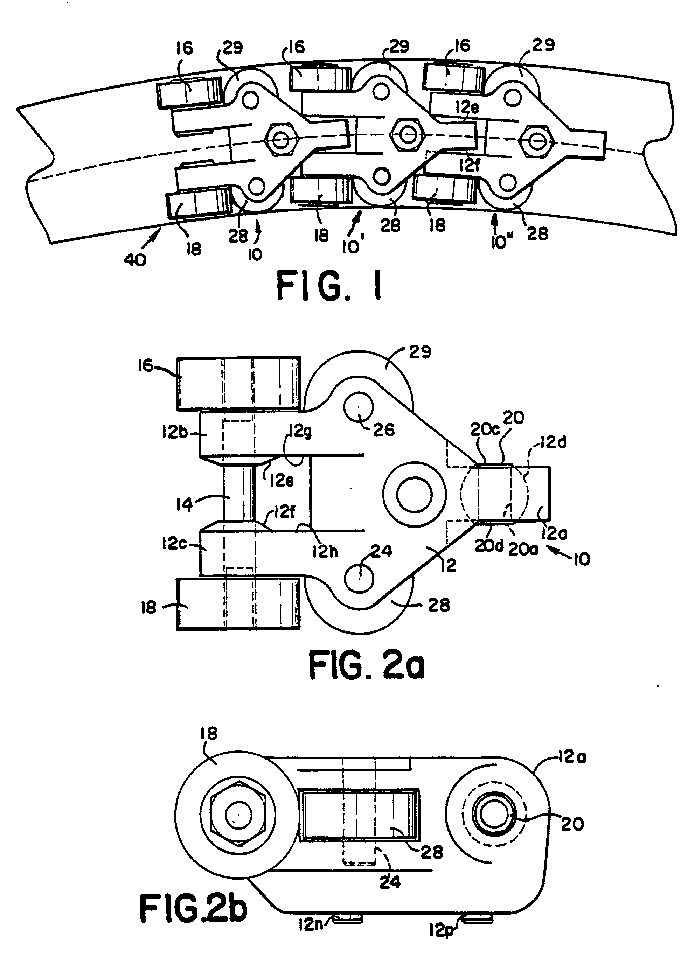

Figure 1 shows a convoyer chain comprised of several identical interconnected links 10. Although the conveyor chain is typically comprised of a large number of interconnected links, said links have been omitted for the pruposes of simplicity. One interconnecting link 10 is shown in Figures 2a through 2g and is comprised of a unitary main body 12 with integral projection 12a extending in a first direction and a pair of bifurcated arms 12b and 12c extending in a second direction. Each of the arms 12b and 12c is provided with an opening for receiving a roller shaft 14 which rotatably supports vertically aligned rollers 16, 18. Integral arm 12a has a socket-like opening 12d. A pivot ball 20 is arranged within socket 12d and is freely movable in socket 12d. Pivot ball 20 is provided with an opening 20a which receives the roller shaft 14 of adjacent link 10 which is joined thereto in the manner shown best in Figure 1. Tapered projections 12e and 12f integral with arms 12b and 12c extend toward the projection of the link connected thereto and engage the adjacent sides 20c, 20d of pivot ball 20 and further act to center arm 12a and space the arm 12a from the confronting surfaces 12g and 12h of integral arms 12b and 12c to permit links to experience swingable movement relative to one another so as to be capable of following a curved path shown, for example, by dotted line 22 in Figure 1. The radius of curvature of path 22 is limited only by engagement of the vertically aligned rollers 16, 18 with guide walls of the adjacent interconnected link.

The unitaury body 12, which is preferably a molded member, provides a rugged, positive and yet smooth swivel socket four pivot ball 20, which is molded into body 12. The body 12 is molded of a suitable plastic material, which may, for example, be a fiber reenforced plastic material such as nylon containing glass fibers. The pivot ball 20 is preferably a metallic member such as steel.

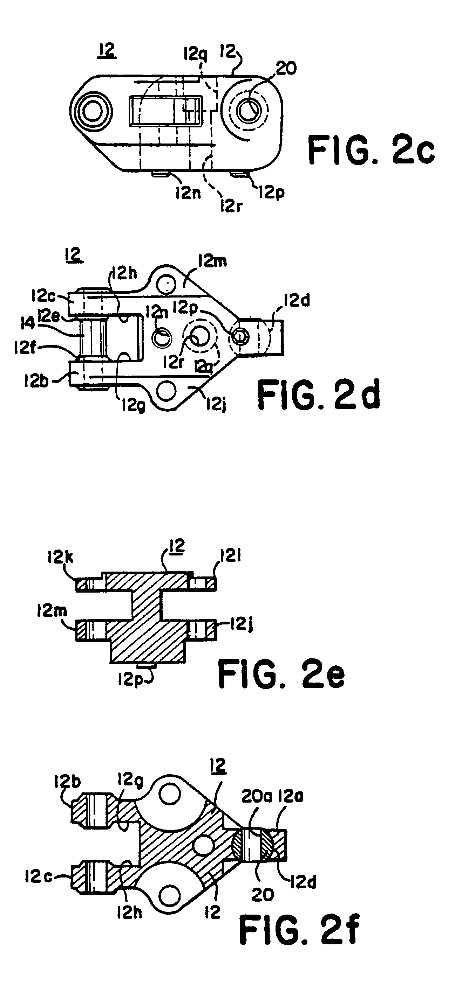

Each link 10 is further provided with first and second pairs of integral arms 12h-12j and 12k-12m, shown best in Figure 2e, each of the arms being provided with openings for receiving and associated roller pin 24, 26 (note especially Figures 2a and 2b) which pins are press fitted into the openings of the associated integral arm pairs for freewheelingly supporting horizontally aligned rollers 28, 29. It should be understood that rollers 14, 16, 28 and 29 are preferably provided with roller bearings (not shown for purposes of simplicity).

The manner in which the vertically (14, 16) and horizontally (28, 29) aligned rollers guide the chain will be described hereinbelow in connection with Figures 1 and 8a, for example.

Each link 10 is further provided with vertically aligned bore having a large diameter upper bore portion 12g and a smaller diameter lower bore portion 12r which cooperatively define shoulder 12s. The bore receives a threaded rod forming an integral part of the gripper assembly 30 (see Figure 2) which extends through said lower bore 12r and into upper bore 12g. A fastening nut 42 readily engages the gripper assembly threaded rod and secures the gripper assembly to the link as shown best in Figure 2g. A pair of integral projections 12n and 12p extend downwardly from body 12 of link 10 and through suitable openings (to be more fully described) in the gripper assembly 30 to properly align the gripper assembly 30 upon link 10.

## Claims

1. Interconnecting memvers (10, 10', 10") forming a gripper conveyor chain being adapted to support a gripper assembly and being comprised of :

a solid body having a main body portion(12) ;

an integral pair of bifurcated arms (12b, 12c) extending in a first direction from said body portion each arm having an opening ;

said openings being substantially coaxially aligned for receiving a linking pin (14) ;

The opposite end of said main body portion having an integral projection (12a) which is positioned in the gap space between the pair of bifurcated arms of an adjacent interconnecting member ;

said single arm having a substantially spherical-shaped cavity (12d) communicating with opposite sides of said arm (12a) ;

a substantially spherical-shaped bearing (20) being slidably encased within said spherical-shaped cavity forming a ball-in-socket assembly and having a through opening (20a) for receiving said linking pin (14),

said spherical-shaped bearing rotatably supporting its interconnecting member on said linking pin and enabling the pin to swivel in mutualy perpendiclar directions ;

the end of said pin (14) extending beyond the outer ends of said pair of arms ; a roller (16, 18) being rotatably mounted on each end of said linking pin ;

means for securing said rollers against axial movement on said linking pin, characterized in that said ball shaped bearing (20) is metallic and is molded in place in said body member (12), which is a molded plastics member.

2. The interconnecting member of claim 1 wherein said ball shaped bearing (20) is made of steel.

## Ansprüche

1. Verbindungsglieder (10, 10', 10"), die eine Greifer-Transportkette als Tragorgan für eine Greiferanordnung bilden, bestehend aus :

einem festen Körper mit einem Hauptteil (12) ;

einem von diesem Hauptteil in eine erste Richtung weisenden gabelförmigen Armpaar mit jeweils einer Öffnung ;

wobei diese Öffnungen zur Aufnahme eines Gelenkzapfens (14) im wesentlichen koaxial ausgerichtet sind ;

wobei das gegenüberliegende Ende des Hauptteiles des Körpers einen abstehenden Ansatz (12a) aufweist, welcher im Zwischenraum des gabelförmiggen Armpaares eines anschließenden Verbindngsgliedes angeordnet ist ;

wobei dieser Einzelarm eine mit gegenüberliegenden Seiten des Armes in Verbindung stehende, im wesentlichen kugelförmige Aushöhlng (12d) afweist ;

wobei eine im Kugelgelenk bildende, im wesentlichen kugelförmige Stütze (20) mit einer Durchgangsöffnung (20a) zur Aufnahme des Gelenkzapfens(14) verschieblich in dieser kugelförmigen Aushöhlung eingeschlossen ist ;

wobei diese kugelförmige Stütze ihr Verbindungsglied af diesem Gelenkzapfen verdrehbar stützt und den Gelenkzapfen sich in zueinander rechtwinkligen Richtungen schwenken läßt ;

wobei sich das Ende dieses Gelenkzapfens (14) über die Außenenden des Armpaares erstreckt ;

wobei auf jedem Ende dieses Gelenkzapfens eine Rolle (16, 18) verdrehbar montiert ist ;

wobei Organe zur Sicherung dieser Rollen vor einer Axialbewegung af dem Gelenkzapfen vorgesehen sind, **dadurch gekennzeichnet**, daß diese kugelförmige Stütze (20) aus Metall ist und fest in dieses Körperteil (12) eingegossen ist, das ein Kunststoffpreßteil ist.

2. Verbindungsglied nach Anspruch 1, bei dem diese kugelförmige Stütze (20) as Stahl hergestellt ist.

## Revendications

1. Eléments d'interconnexion (10, 10', 10") formant une chaîne convoyeuse à crampons conçue pour supporter un ensemble de crampons et étant constituée de :

une pièce massive ayant une partie de pièce principale (12) ;

une paire de bras fourchus intégrés (12b, 12c) s'étendant dans une première direction à partir de ladite partie principale chaque bras comportant une ouverture ;

lesdites ouvertures étant sensiblement alignées de manière coaxiale pour recevoir une broche de liaison (14) ;

l'extrémité opposée de ladite partie de pièce principale comportant une pièce en saillie intégrée (12a) qui est placée dans l'espace séparant les deux bras fourchus d'un élement d'interconnexion adjacent ;

ledit bras unique ayant une cavité de forme sensiblement sphérique (12d) en communication avec les côtés opposés dudit bras (12a) ;

un palier (20) de forme sensiblement sphérique étant logé en coulissement à l'intérieur d'une cavité de forme cylindrique en formant un ensemble bille-douille et étant traversé par une ouverture (20a) pour recevoir ladite broche de liaison (14) ;

ledit palier de forme sphérique supportant en rotation son élément d'interconnexion sur ladite broche d'assemblage et permettant à la broche de pivoter dans des directions perpendiculaires entre elles ;

l'extrémité de ladite broche (14) s'étendant a-delà des extrémités extérieures de ladite paire de bras ;

un galet (16, 18) étant monté en rotation à chaque extrémité de ladite broche de liaison ;

un moyen pour fixer lesdits galets en les empêchant de subir un mouvement axial sur ladite broche de liaison, caractérisé en ce que ledit palier en forme de bille (20) est métallique et moulée en place dans ladite pièce principale (12), qui est une pièce en matière plastique Moulée.

2. Elément d'interconnexion selon la revendication 1 dans lequel ledit palier en forme de bille (20) est construit en acier.

FIG. I

FIG. 2a

FIG. 2b

FIG. 2c

FIG. 2d

FIG. 2e

FIG. 2f